# NEUE EUROPÄISCHE PATENTSCHRIFT

(11) **EP 0 983 886 B2**
(45) Veröffentlichungstag und Bekanntmachung des Hinweises auf die Entscheidung über den Einspruch: **21.11.2007**
(45) Hinweis auf die Patenterteilung: 29.10.2003
(21) Anmeldenummer: 99116483.1
(22) Anmeldetag: 23.08.1999
(51) Int. Cl.: B60H 1/00

(54) **Kraftfahrzeug-Schalteranordnung**
Vehicle switch assembly
Ensemble interrupteur de véhicule

(30) Priorität: 31.08.1998 DE 19839602
(43) Veröffentlichungstag der Anmeldung: 08.03.2000
(73) Patentinhaber: Delphi Technologies Inc., Troy, MI 48007 (US)
(72) Erfinder: Rudolph, Gerd, 55459 Aspisheim (DE); Luley, Rainer, 55129 Mainz (DE); Zuk, Daniela, 65199 Wiesbaden (DE); Leuschner, Markus, 55559 Bretzenheim (DE)
(74) Vertreter: Becker, Bernd

(56) Entgegenhaltungen:
- EP-A- 0 733 502
- DE-A- 19 542 913
- DE-C- 4 439 992
- DE-C1- 19 604 332
- Prospekt Preh-Werke GmbH & Co.KG, Bad Neustadt, Druck 1/93

## Beschreibung

Die Erfindung bezieht sich auf eine Kraftfahrzeug-Schalteranordnung mit einem Gebläseschalter, einem Wahlschalter für Lüftungsfunktionen und mit mindestens einem verrastbaren Drucktastenschalter für die Auswahl zwischen Umluft und Frischluft wie offenbart in DE 19 542 913 oder DE 196 04 332 C1.

Derartige Kraftfahrzeug-Schalteranordnungen sind in den verschiedensten Ausführungen bekannt. Mittels eines Wahlschalters für Lüftungsfunktionen läßt sich der räumliche Bereich bestimmen, in den die Luft in den Fahrgastbereich eines Kraftfahrzeugs einströmen soll. So lassen sich beispielsweise über den Wahlschalter Lüftungsklappen in einem einer Windschutzscheibe zugeordneten Bereich und/oder in einem Fußraumbereich betätigen. Im weiteren sind dem Wahlschalter Funktionen zur Betätigung von Heizungsklappen zugeordnet, die neben der Auswahl des Zuströmbereichs der Luft auch deren Temperierung ermöglichen. Falls keine Zufuhr von Frischluft erfolgen soll, aber eine Umverteilung der im Fahrgastraum befindlichen Luft dennoch gewünscht wird bzw. erforderlich ist, läßt sich mittels eines verrastbaren Drucktastenschalters eine Umluft-Schaltstellung auswählen. Die unverrastete Schaltstellung dieses Drucktastenschalters gewährt die Zufuhr von Frischluft bei entsprechender Stellung des Wahlschalters. Ein Gebläseschalter ermöglicht die Regulierung der Strömungsgeschwindigkeit der Luft sowohl in der Umluft-Schaltstellung als auch in der Frischluft-Schaltstellung des Drucktastenschalters.

Zur Kombination der unterschiedlichen Lüftungsfunktionen ist es stets notwendig, mehrere der in der Kraftfahrzeug-Schalteranordnung vorgesehenen Schalter zu betätigen, wobei unter bestimmten Voraussetzungen eine Kombination der auswählbaren Lüftungsfunktionen, die dem Bediener bekannt sein muß, die günstigste ist. Die Auswahl einer solchen Kombination lenkt von Straßenverkehr ab, da sie Entscheidungen und Handlungen des Bedieners zum Betätigen der entsprechenden Schalter erfordert.

Es ist Aufgabe der Erfindung, eine Kraftfahrzeug-Schalteranordnung der eingangs genannten Art zu schaffen, die bei der Auswahl einer bestimmten Lüftungsfunktion gegebenenfalls einen weiteren Schaltvorgang automatisch auslöst, wobei die Kraftfahrzeug-Schalteranordnung einen möglichst kompakten Aufbau aufweisen soll.

Erfindungsgemäß wird die Aufgabe durch die Merkmale des Anspruchs 1 gelöst.

Die Unterbringung der Schalter in einem Gehäuse gewährleistet einen kompakten Aufbau der Kraftfahrzeug-Schalteranordnung. Die Enteisung einer Windschutzscheibe erfolgt am schnellsten bei der Zufuhr von Frischluft in den Bereich der Windschutzscheibe. Die Frischluft nimmt bei entsprechend niedrigen Temperaturen einen geringeren Wassergehalt bis zur Sättigung auf als die relativ warme Luft innerhalb des Fahrgastraumes des Kraftfahrzeugs, wodurch in der Umluft-Schaltstellung des Drucktastenschalters die Windschutzscheibe aufgrund der erhöhten Luftfeuchtigkeit von innen beschlägt bzw. vereist. Daher stellt die erfindungsgemäße Lösung sicher, daß der Wahlschalter beim Übergang in die Enteisungsschaltstellung die Verrastung des Drucktastenschalters in der Umluft-Schaltstellung aufhebt und dieser selbsttätig die Frischluft-Schaltstellung einnimmt. Zugleich bewirkt die Enteisungsschaltstellung des Wahlschalters in bekannter Weise ein Öffnen von Lüftungsklappen in einem der Windschutzscheibe zugeordneten Bereich, so daß die Frischluft gezielt zugeführt wird. Gleichzeitig werden entsprechende Heizungsklappen betätigt, um die von der Heizung getrocknete und vorgewärmte Frischluft in den Bereich der Windschutzscheibe zu leiten. Zur Regelung der Intensität der Frischluftzufuhr bzw. der Umluftströmung kann zusätzlich der Gebläseschalter betätigt werden.

Bei minimalem Platzbedarf ist ein kostengünstiger und zuverlässig arbeitender Aufbau der Kopplungseinrichtung realisiert und ein störungsfreies Zusammenwirken von Wahlschalter, Kopplungseinrichtung und Drucktastenschalter gewährleistet.

Um die Anordnung zusätzlicher aufwendiger Führungselemente zu vermeiden und gleichzeitig den Funktionsablauf sicherzustellen, ist bevorzugt der Schieber winkelförmig ausgebildet, und ein Schenkel des Schiebers ist in einer den Drucktastenschalter aufnehmenden Gehäusewand geführt.

Damit der Schieber in anderen Schaltstellungen des Wahlschalters als der Enteisungsschaltstellung nicht auf die Verrastung des Drucktastenschalters wirkt, und der Drucktastenschalter in diesen anderen Schaltstellungen frei betätigbar ist, stützt sich zweckmäßigerweise an dem anderen Schenkel des Schiebers ein Ende einer Druckfeder ab, deren anderes Ende an einer zugeordneten Gehäusewand anliegt.

Nach einer vorteilhaften Weiterbildung der Erfindung trägt der eine Arm des Hebels einen dem Schaltnocken des Wahlschalters zugewandten Betätigungsansatz, und der andere Arm weist an einer Abwinklung einen dem Schieber zugewandten Betätigungsansatz auf. Das freie Ende jedes Betätigungsansatzes ist mit einem Radius versehen. Die Arme des Hebels sind so bemessen, daß sie eine günstige Kraftübertragung bei gleichzeitiger Überwindung des Versatzes zwischen Wahlschalter und Drucktastenschalter ermöglichen. Die linienförmige Anlage der Betätigungsansätze aufgrund der Radien sowohl an dem Schaltnocken des Wahlschalters als auch an dem Schieber stellt eine vorteilhafte Krafteinleitung sicher.

Zur Sicherstellung einer Blockierung bzw. Entriegelung des Drucktastenschalters je nach Schaltstellung für Umluft oder Frischluft ist zweckmäßigerweise die Verrastung des Drucktastenschalters als Rastkurvenmechanismus ausgebildet, der eine in einem Schaltglied des Drucktastenschalters ausgebildete Herzkurve, in die ein schaltergehäuseseitig gelagerter und druckfederbelasteter Rasthebel eingreift, auf den der Schieber einwirkt, umfaßt.

Um in die Kraftfahrzeug-Schalteranordnung weitere Funktionen zu integrieren, sind in dem Gehäuse ein weiterer Drucktastenschalter für das Ein/Ausschalten einer Klimaanlage und ein weiterer Drucktastenschalter für das Ein/Ausschalten einer Heckscheibenheizung untergebracht.

Für eine gute Erkennbarkeit der unterschiedlichen Schalter weisen bevorzugt sämtliche Drucktastenschalter hinterleuchtbare Symbolfelder auf, deren Ausleuchtung mittels zweier Leuchtkörper mit nachgeordneten Lichtleitern erfolgt.

Es versteht sich, daß die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im folgenden anhand eines Ausführungsbeispieles unter Bezugnahme auf die zugehörigen Zeichnungen naher erläutert. Es zeigen:

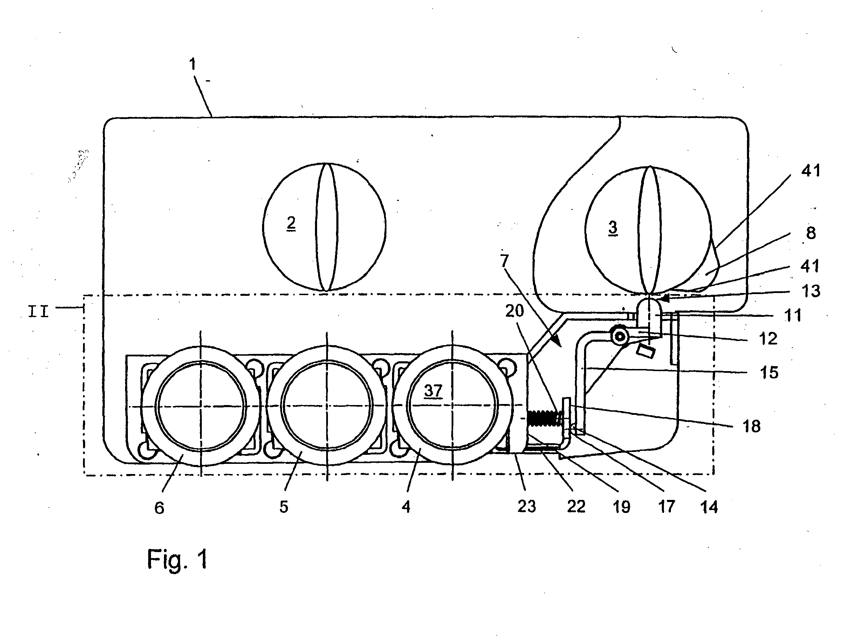

- Fig.1: eine Draufsicht auf eine erfindungsgemäße Kraftfahrzeug-Schalteranordnung,

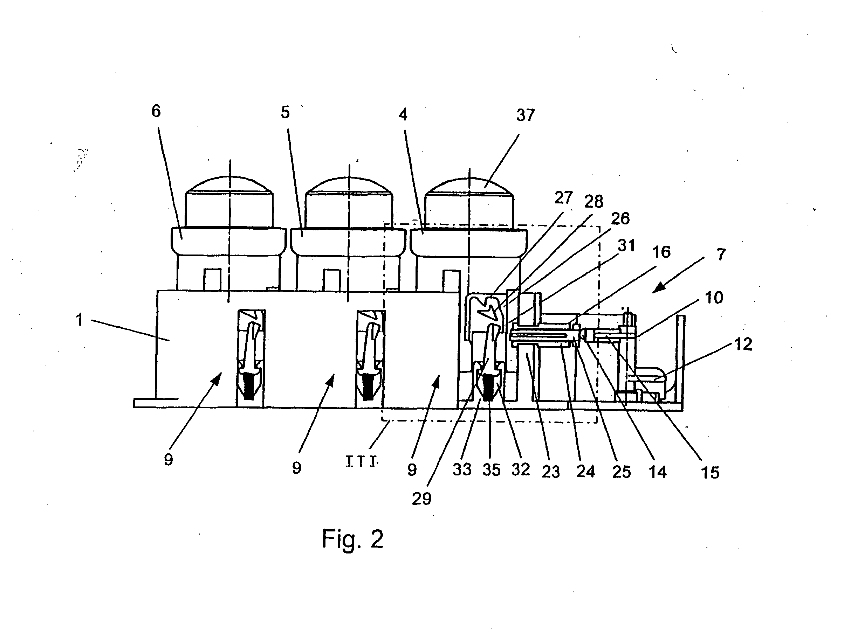

- Fig.2: eine Vorderansicht einer Einzelheit II nach Fig. 1,

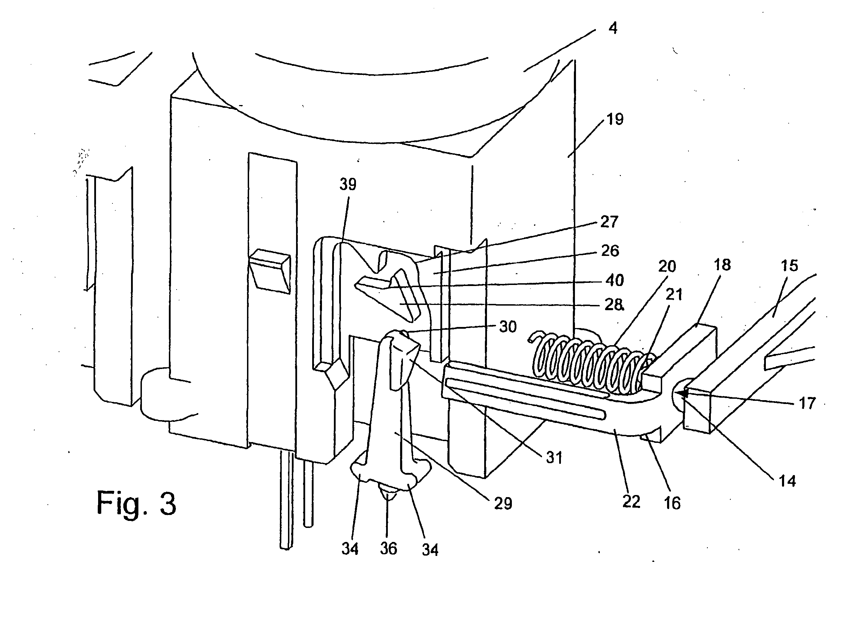

- Fig.3: eine vergrößerte perspektivische Darstellung der Einzelheit III nach Fig. 2 und
- Fig.4 bis Fig.8: Details einer Schaltfolge der erfindungsgemäßen Kraftfahrzeug-Schalteranordnung

Eine Kraftfahrzeug-Schalteranordnung umfaßt einen in einem Gehäuse 1 angeordneten Gebläseschalter 2, einen Wahlschalter 3 für Lüftungsfunktionen sowie drei horizontal und vertikal zum Wahlschalter 3 versetzte Drucktastenschalter 4, 5, 6, die verrastbar ausgeführt sind. Der Drucktastenschalter 4 dient zur Auswahl zwischen Umluft und Frischluft, wobei die Umluft-Schaltstellung die verrastete Schaltstellung ist. Der Drucktastenschalter 5 ist für das Ein/Ausschalten einer Klimaanlage und der Drucktastenschalter 6 für das Ein/Ausschalten einer Heckscheibenheizung vorgesehen. Die Drucktastenschalter 4, 5, 6, weisen nicht dargestellte, hinterleuchtbare Symbolfelder auf. Zwischen dem Wahlschalter 3 und dem Drucktastenschalter 4 ist eine mechanische Kopplungseinrichtung 7 angeordnet, die von einem umfangsseitigen Schaltnocken 8 des Wahlschalters 3 beim Übergang in eine bestimmte Lüftungsfunktion, nämlich der Enteisungsschaltstellung, betätigt wird und zwangsweise auf eine Verrastung 9 des Drucktastenschalters 4 zur Aufhebung derselben wirkt.

Die in dem Gehäuse 1 verdrehbar gelagerte Kopplungseinrichtung 7 umfaßt einen zweiarmigen Hebel 10, dessen einer mit einem Betätigungsansatz 11 versehener Arm 12 dem Schaltnocken 8 des Wahlschalters 3 zugeordnet ist, wobei das freie Ende des Betätigungsansatzes 11 mit einem Radius 13 versehen ist, und dessen anderer ebenfalls mit einem Betätigungsansatz 14 versehener Arm 15 auf einen winkelförmig ausgebildeten Schieber 16 einwirkt. Der Betätigungsansatz 14 des Arms 15 weist ebenfalls an seinem freien Ende einen Radius 17 auf.

Der winkelförmige Schieber 16 ist zwischen dem Arm 15 des Hebels 10 und der Verrastung 9 des Drucktastenschalters 4 angeordnet. Zwischen einem von dem Arm 15 des Hebels 10 beaufschlagten Schenkel 18 und einer zugeordneten Gehäusewand 19 ist eine Druckfeder 20 angeordnet, die eine Rückstellung der Kopplungseinrichtung 7 sicherstellt. Zur Lagefixierung der Druckfeder 20 ist die der Gehäusewand 19 zugewandte Seite des Schenkels 18 des Schiebers 16 mit einem von der Druckfeder 20 übergriffenen Ansatz 21 versehen. Ein auf die Verrastung 9 wirkender Schenkel 22 des Schiebers 16 ist in einer den Drucktastenschalter 4 aufnehmenden Gehäusewand 23 geführt, wobei der Querschnitt des Schenkels 22 im wesentlichen T-förmig ausgebildet ist, und die Gehäusewand 23 den Fuß 24 des Schenkels 22 derart umgreift, daß der Steg 25 des Schenkels 22 mit Spiel von der Gehäusewand 23 aufgenommen ist.

Die Verrastung 9 jedes Drucktastenschalters 4, 5, 6 umfaßt eine an einem zugeordneten Schaltglied 26 angeformte Rastkurvenbahn 27, in deren Zentrum eine Herzkurve 28 ausgebildet ist, sowie einen schwenkbeweglich gelagerten Rasthebel 29, der an seinem oberen Ende mit einem zwischen Rastkurvenbahn 27 und Herzkurve 28 verlaufenden Führungsnocken 30 und einer dem Schenkel 22 des Schiebers 16 zugewandten Betätigungsfläche 31 versehen ist. Das untere Ende des in einer Schwenkkammer 32 eines Drucktastenschaltergehäuses 33 angeordneten, mit beidseitigen Ausrichtnocken 34 versehenen Rasthebels 29 weist einen von einer Druckfeder 35 übergriffenen Zapfen 36 auf.

Nachfolgend werden unterschiedliche Kombinationen der Schaltstellungen des Wahlschalters 3 und des Drucktastenschalters 4 für die Auswahl zwischen Umluft und Frischluft erläutert.

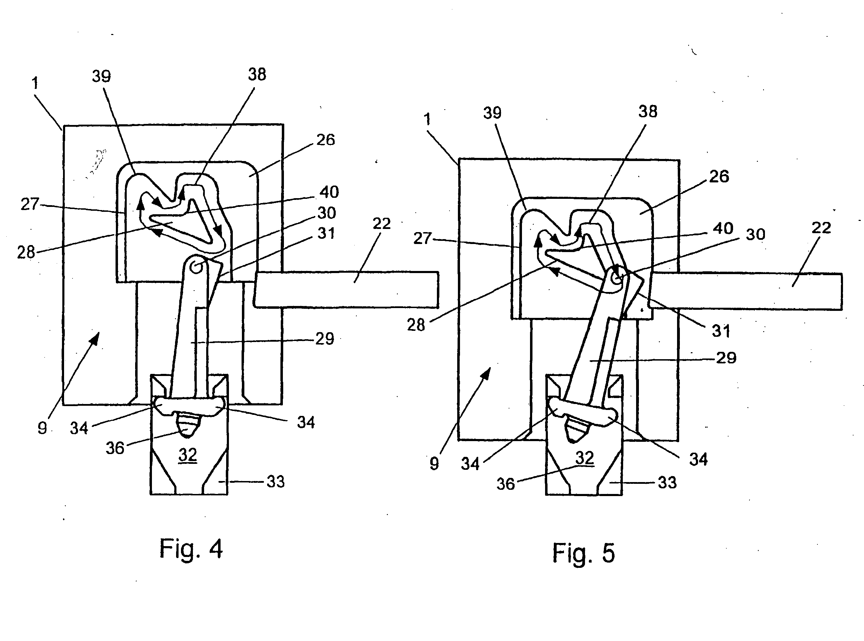

Befindet sich der Wahlschalter 3 in einer beliebigen anderen Schaltstellung als der Enteisungsschaltstellung, dann wirkt der Schaltnocken 8 nicht auf den Betätigungsansatz 11 des Hebels 10 ein, und der Schieber 16 ist aufgrund der Wirkung der Druckfeder 20 in einer zurückgestellten, die Rastkurvenbahn 27 freigebenden Position. Nach Fig. 4 ist der Drucktastenschalter 4 frei betätigbar, wobei sich der Führungsnocken 30 des Rasthebels 29 der Verrastung 9 in einer unverrasteten Frischluft-Schaltstellung des Drucktastenschalters 4 in einem Bereich der Rastkurvenbahn 27 unterhalb der Herzkurve befindet. Die Ausrichtnocken 34 liegen druckfederbelastet an der Oberseite der Schwenkkammer 32 an. Bei der Betätigung einer Taste 37 des Drucktastenschalters 4 erfolgt eine vertikale Verschiebung des Schaltgliedes 26 nach unten, wodurch der Führungsnocken 30 des Rasthebels 39 an der Herzkurve 28 zur Anlage kommt und dieser in Richtung eines Umlaufpfeiles 38 folgt. Die nach unten gerichtete Verschiebung des Schaltgliedes 26 ist durch eine Ausbuchtung 39 begrenzt, an der der Führungsnocken 30 anschlägt. Nach dem Loslassen der Taste 37 gleitet der Führungsnocken 30 entlang der Rastkurvenbahn 27 in eine Herzkurvenraste 40, wodurch sich der Drucktastenschalter 4 in einer verrasteten Umluft-Schaltstellung befindet.

Um von der verrasteten Umluft-Schaltstellung des Drucktastenschalters 4 in die Frischluft-Schaltstellung zu gelangen, muß die Taste 37 erneut betätigt werden. Das Schaltglied 26 wird nach unten verschoben bis der Führungsnocken 30 an der Rastkurvenbahn 27 anliegt. Nach erfolgtem Loslassen der Taste 37 folgt der Führungsnocken 30 der Rastkurvenbahn 27 in Richtung des Umlaufpfeiles 38, und das Schaltglied 26 wird gemäß Fig. 5 unter der Wirkung einer Schaltgliedfeder nach oben geschoben. Hierbei passiert die Betätigungsfläche 31 des Rasthebels 29 den Bereich, in dem sich das freie Ende des Schenkels 22 des Schiebers 16 befindet, mit Spiel. Sonach schwenkt der druckfederbelastete Rasthebel 29 in eine senkrechte Position und die beiden Ausrichtnocken 34 liegen an der Oberseite der Schwenkkammer 32 an, wodurch sich der Drucktastenschalter 4 in der unverrasteten Frischluft-Schaltstellung befindet.

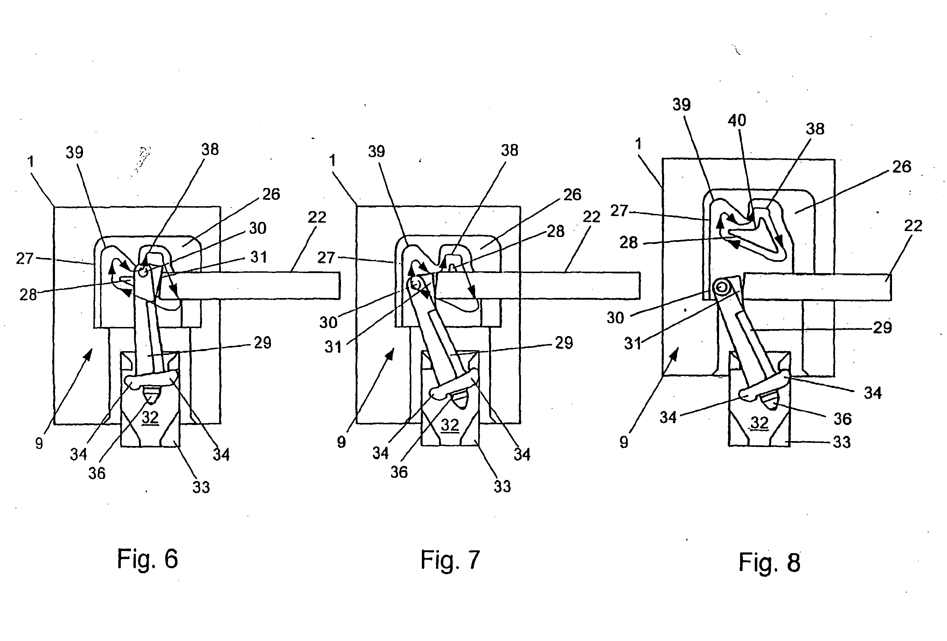

Ist der Drucktastenschalter 4 in der verrasteten Umluft-Schaltstellung entsprechend Fig. 6 und der Wahlschalter 3 für Lüftungsfunktionen wird in die Enteisungsschaltstellung gedreht, beginnt eine der Flanken 41 des Schaltnocken 8 auf die Kopplungseinrichtung 7 zu wirken. Der Betätigungsansatz 11 des Armes 12 des Hebels 10 liegt an einer der Flanken 41 an, wobei der Arm 12 nach unten geschwenkt wird. Daraus resultiert eine nach linksgerichtete Bewegung des Armes 15 des Hebels 10, die den winkelförmigen Schieber 16 entgegen der Wirkung der Druckfeder 20 soweit verschiebt, bis sein freies Ende an der Betätigungsfläche 31 des Rasthebels 29 anliegt. Im weiteren Verlauf erreicht der Wahlschalter 3 die Enteisungsschaltstellung, und der Betätigungsansatz 11 des Hebels 10 befindet sich im Maximum des Schaltnockens 8 (vergl. Fig. 7). Hierbei hat das freie Ende des Schenkels 22 des Schiebers 16 den Rasthebel entgegen der Richtung des Umlaufpfeiles 38 bewegt, wodurch sich der Führungsnocken 30 außerhalb der Herzkurve 28 befindet. Sonach wird das Schaltglied 26 aufgrund der Wirkung einer Schaltgliedfeder nach oben geschoben, und der Drucktastenschalter 4 befindet sich in der unverrasteten Frischluft-Schaltstellung. Da in der Enteisungsschaltstellung des Wahlschalters 3 der Schieber 16 gemäß Fig. 8 aufgrund der Wirkung des Schaltnockens 8 und der Übersetzung des Hebels 10 in der entsprechenden Lage gehalten wird, wonach der Führungsnocken 30 des Rasthebels 29 nicht mit der Rastkurvenbahn 27 bzw. der Herzkurve 28 zusammenwirken kann, ist die Umluft-Schalt-stellung nicht verrastet einstellbar. Der Drucktastenschalter 4 springt nach einer Betätigung der Taste 37 bzw. nach deren Loslassen stets in die Frischluft-Schaltstellung zurück.

Wird der Wahlschalter 3 in eine beliebige andere Schaltstellung als die Enteisungsschaltstellung bewegt, stellt die zwischen der Gehäusewand 19 und dem Schenkel 18 des Schiebers 16 angeordnete Druckfeder 20 die Kopplungseinrichtung 7 zurück, was nach dem Abgleiten des Betätigungsansatzes 14 des Hebels 10 von der entsprechenden Flanke 41 des Schaltnockens 8 des Wahlschalters 3 möglich ist. Der Schenkel 22 des Schiebers 16 befindet sich nunmehr entsprechend Fig. 4 außerhalb des Bereiches der Rastkurvenbahn 27, und der Führungsnocken 30 des Rasthebels 29 ist in einem Bereich unterhalb der Herzkurve 28, wobei die Ausrichtnocken 34 druckfederbelastet an der Oberseite der Schwenkkammer 32 anliegen. Der Drucktastenschalter 4 ist sonach beliebig zu betätigen.

## Patentansprüche

1. Kraftfahrzeug-Schalteranordnung mit einem Gebläseschalter (2), einem Wahlschalter (3) für Lüftungsfunktionen und mit mindestens einem verrastbaren Drucktastenschalter (4) für die Auswahl zwischen Umluft und Frischluft wobei sämtliche Schalter (2, 3, 4) in einem Gehäuse (1) untergebracht sind, der Wahlschalter (3) beim Übergang in eine Enteisungsschaltstellung zwangsweise mechanisch die Verrastung (9) des Drucktastenschalters (4) in der Umluft-Schaltstellung aufhebt, dieser selbsttätig in die Frischluft-Schaltstellung übergeht und eine zwischen dem Wahlschalter (3) und dem zu diesem horizontal und vertikal versetzten Drucktastenschalter (4) angeordnete Kopplungseinrichtung (7), einen in dem Gehäuse (1) drehbar gelagerten, zweiarmigen Hebel (10), der einem Schaltnocken (8) des Wahlschalters (3) zugeordnet ist, und einen von dem Hebel (10) beaufschlagten, federbelasteten Schieber (16), der auf die Verrastung (9) des Drucktastenschalters (4) einwirkt, umfaßt.

2. Kraftfahrzeug-Schalteranordnung nach Anspruch 1, **dadurch gekennzeichnet, daß** der Schieber (16) winkelförmig ausgebildet ist, und ein Schenkel (22) des Schiebers (16) in einer den Drucktastenschalter (4) aufnehmenden Gehäusewand (23) geführt ist.

3. Kraftfahrzeug-Schalteranordnung nach den Ansprüchen 1 und 2, **dadurch gekennzeichnet, daß** sich an dem anderen Schenkel (18) des Schiebers (16) ein Ende einer Druckfeder (20) abstützt, deren anderes Ende an einer zugeordneten Gehäusewand (19) anliegt.

4. Kraftfahrzeug-Schalteranordnung nach Anspruch 1, **dadurch gekennzeichnet, daß** der eine Arm (12) des Hebels (10) einen dem Schaltnocken (8) des Wahlschalters (3) zugewandten Betätigungsansatz (11) trägt, und der andere Arm (15) an einer Abwinklung einen dem Schieber (16) zugewandten Betätigungsansatz (14) aufweist.

5. Kraftfahrzeug-Schalteranordnung nach Anspruch 4, **dadurch gekennzeichnet, daß** das freie Ende jedes Betätigungsansatzes (11, 14) mit einem Radius (13, 17) versehen ist.

6. Kraftfahrzeug-Schalteranordnung nach Anspruch 1, **dadurch gekennzeichnet, daß** die Verrastung (9) des Drucktastenschalters (4) als Rastkurvenmechanismus ausgebildet ist, der eine in einem Schaltglied (26) des Drucktastenschalters (4) ausgebildete Herzkurve (28), in die ein schaltergehäuseseitig gelagerter und druckfederbelasteter Rasthebel (29) eingreift, auf den der Schieber (16) einwirkt, umfaßt.

7. Kraftfahrzeug-Schalteranordnung nach einem der Ansprüche 1 bis 6, **dadurch gekennzeichnet, daß** in dem Gehäuse (1) ein weiterer Drucktastenschalter (5) für das Ein/Ausschalten einer Klimaanlage und ein weiterer Drucktastenschalter (6) für das Ein/Ausschalten einer Heckscheibenheizung untergebracht sind.

8. Kraftfahrzeug-Schalteranordnung nach einem der Ansprüche 1 bis 7, **dadurch gekennzeichnet, daß** sämtliche Drucktastenschalter (4, 5, 6) hinterleuchtbare Symbolfelder aufweisen, deren Ausleuchtung mittels zweier Leuchtkörper mit nachgeordneten Lichtleitern erfolgt.

## Claims

1. Motor vehicle switch arrangement including a blower switch (2), a selector switch (3) for ventilation operations and including at least one lockable pushbutton switch (4) for the selection between circulating air and fresh air, wherein all the switches (2, 3, 4) are accommodated in a housing (1), the selector switch (3), when transferring into a de-icing switch position, forcibly mechanically unlocks the locking means (9) of the pushbutton switch (4) in the circulating air position, this latter automatically passes into the fresh air switch position, and a connecting device (7) disposed between the selector switch (3) and the pushbutton switch (4), which is offset relative to the selector switch horizontally and vertically, the connecting device (7) including a two-legged lever (10), which is rotatably mounted in the housing (1) and is associated with a trip cam (8) of the selector switch (3), and a spring-loaded slide (16), which is acted upon by the lever (10) and acts on the locking means (9) of the pushbutton switch (4).

2. Motor vehicle switch arrangement according to claim 1, **characterised in that** the slide (16) is angular, and one leg (22) of the slide (16) is guided in a housing wall (23) which accommodates the pushbutton switch (4).

3. Motor vehicle switch arrangement according to claims 1 and 2, **characterised in that** one end of a compression spring (20) is supported on the other leg (18) of the slide (16), its other end abutting an associated housing wall.

4. Motor vehicle switch arrangement according to claim 1, **characterised in that** the one arm (12) of the lever (10) carries an actuating projection (11) facing the trip cam (8) of the selector switch (3), and the other arm (15) has an actuating projection (14) facing the slide (16) on an angular portion.

5. Motor vehicle switch arrangement according to claim 4, **characterised in that** the free end of each actuating projection (11, 14) is provided with a radius (13, 17).

6. Motor vehicle switch arrangement according to claim 1, **characterised in that** the locking means (9) of the pushbutton switch (4) is in the form of a stop curve mechanism, which includes a cardiod (28) configured in a switching member (26) of the pushbutton switch (4), into which cardiod (28) a stop lever (29), which is compression spring-loaded and mounted on the side of the switching housing, engages, on which stop lever the slide (16) acts.

7. Motor vehicle switch arrangement according to one of claims 1 to 6, **characterised in that** another pushbutton switch (5) for the switching-on/switching-off of an air conditioning system and another pushbutton switch (6) for the switching-on/switching-off of a rear windscreen heating means are accommodated in the housing (1).

8. Motor vehicle switch arrangement according to one of claims 1 to 7, **characterised in that** all the pushbutton switches (4, 5, 6) have symbol fields which can be backlit, the illumination of which is effected by means of two luminary bodies with fibre-optics light conductors subsequently inserted.

## Revendications

1. Ensemble interrupteur de véhicule automobile comportant un interrupteur de ventilateur (2), un sélecteur (3) pour les fonctions de ventilation et au moins un interrupteur à bouton-poussoir (4) à accrochage pour la sélection entre l'air recyclé et l'air frais, tous les interrupteurs (2, 3, 4) étant logés dans un boîtier (1), le sélecteur (3), en passant dans une position de commande de dégivrage, supprimant par forçage mécanique l'accrochage (9) de l'interrupteur à bouton-poussoir (4) dans la position de commande de circulation d'air, ce dernier passant automatiquement dans la position de commande d'air frais, et un dispositif de couplage (7) disposé entre le sélecteur (3) et l'interrupteur à bouton-poussoir (4), décalé horizontalement et verticalement par rapport à celui-ci, comprenant un levier (10) à deux bras, monté tournant dans le boîtier (1), qui est associé à une came de commutation (8) du sélecteur (3), ainsi qu'un coulisseau (16) soumis à l'action d'un ressort et actionné par le levier (10), qui agit sur l'accrochage (9) de l'interrupteur à bouton-poussoir (4).

2. Ensemble interrupteur de véhicule automobile selon la revendication 1, **caractérisé en ce que** le coulisseau (16) est de forme angulaire et une branche (22) du coulisseau (16) est guidée dans une paroi de boîtier (23) recevant l'interrupteur à bouton-poussoir (4).

3. Ensemble interrupteur de véhicule automobile selon les revendications 1 et 2, **caractérisé en ce que** sur l'autre branche (18) du coulisseau (16) prend appui une extrémité d'un ressort de pression (20) dont l'autre extrémité s'applique contre une paroi de boîtier (19) associée.

4. Ensemble interrupteur de véhicule automobile selon la revendication 1, **caractérisé en ce qu'**un bras (12) du levier (10) porte un appendice d'actionnement (11) tourné vers la came de commutation (8) du sélecteur (3), et l'autre bras (15) comporte, sur une partie coudée, un appendice d'actionnement (14) tourné vers le coulisseau (16).

5. Ensemble interrupteur de véhicule automobile selon la revendication 4, **caractérisé en ce que** l'extrémité libre de chaque appendice d'actionnement (11, 14) est pourvue d'un rayon (13, 17).

6. Ensemble interrupteur de véhicule automobile selon la revendication 1, **caractérisé en ce que** l'accrochage (9) de l'interrupteur à bouton-poussoir (4) est réalisé en tant que mécanisme à courbe d'encliquetage qui comprend une courbe en coeur (28) réalisée dans un organe de commutation (26) de l'interrupteur à bouton-poussoir (4), dans laquelle s'engage un levier d'encliquetage (29), monté côté boîtier, de l'interrupteur et soumis à l'action d'un ressort de pression, sur lequel agit le coulisseau (16).

7. Ensemble interrupteur de véhicule automobile selon l'une des revendications 1 à 4, **caractérisé en ce que** dans le boîtier (1) sont logés un autre interrupteur à bouton-poussoir (5) pour la mise en marche/mise à l'arrêt d'un système de climatisation et un autre interrupteur à bouton-poussoir (6) pour la mise en marche/mise à l'arrêt d'un chauffage de vitre arrière.

8. Ensemble interrupteur de véhicule automobile selon l'une des revendications 1 à 7, **caractérisé en ce que** tous les interrupteurs à bouton-poussoir (4, 5, 6) comportent des zones à symboles rétroéclairées dont l'éclairage s'effectue au moyen de deux corps luminescents avec guides optiques aval.
